Europäisches Patentamt

**European Patent Office**

Office européen des brevets

(19)

(11) Publication number: **0 013 458**
**B1**

(12) ## EUROPEAN PATENT SPECIFICATION

(45) Date of publication of patent specification: 14.09.83

(51) Int. Cl.³: **F 16 L 47/06, B 29 C 17/02**

(21) Application number: **79200800.5**

(22) Date of filing: **27.12.79**

(54) **A plastics pipe provided with a socket and method of forming such a plastics pipe.**

(30) Priority: **09.01.79 NL 7900173**

(43) Date of publication of application:
**23.07.80 Bulletin 80/15**

(45) Publication of the grant of the patent:
**14.09.83 Bulletin 83/37**

(84) Designated Contracting States:
**AT BE CH DE FR GB IT SE**

(58) References cited:
**FR - A - 1 095 624**
**FR - A - 2 326 647**
**GB - A - 1 093 662**
**GB - A - 1 220 140**

(73) Proprietor: **WAVIN B.V.**
**Händellaan 251**
**NL-8031 EM Zwolle (NL)**

(72) Inventor: **Marissen, Roelof Herman**
**4 Schaepmanstraat**
**NL-7691 BZ Bergentheim (NL)**
Inventor: **Beune, Johannes Hendrikus**
**62 Beekberg**
**NL-7772 DR Hardenberg (NL)**

(74) Representative: **Van der Veken, Johannes Adriaan et al.**
**Willem Witsenplein 3 & 4**
**NL-2509 LP The Hague (NL)**

Courier Press, Leamington Spa, England

# A plastics pipe provided with a socket and method of forming such a plastics pipe.

The invention relates to a plastics pipe provided with a socket at one end, said socket having at least one circumferentially extending groove, said pipe comprising an inner wall and an outer wall and longitudinal partitions in between them and being integral with said inner wall and said outer wall bounding longitudinally extending channels which groove has been formed by pressing the walls of the channels onto each other at a position spaced from the pipe end.

A plastics pipe of this type comprising a socket, which socket has one circumferentially extending groove, is known from FR—A—2 326 647.

Due to the absence of longitudinally extending channels or cavities in the socket wall the strength properties of the socket are considerably reduced. This holds the more so as the diameter of the socket is much greater than the diameter of the pipe and in the region of the groove the wall thickness is even more reduced with respect to the wall thickness of the socket.

Another disadvantage is that the formation of the groove involves the formation of a circumferential elevation upon a wall surface of the plastics pipe at the location of the groove. This is particularly disadvantageous when for instance a socket should be provided with an external groove, for retaining a retaining ring, which together with the front end of the respective pipe, constitutes an end groove chamber for the receipt of part of a sealing member. A circumferential elevation inside the respective pipe parts, upon the inner wall of said pipe part, will then easily give rise to sealing problems.

The present invention aims to provide a plastics pipe with a socket presenting much higher strength properties and with a circumferential elevation, if any, having a height being less than known circumferential elevations.

This is attained according to the invention in that the channels extend in the socket on both sides of the groove.

In this manner it is achieved that, in pipes with channels, a strong socket with a circumferentially extending groove is obtained, not causing any particular reduction in the properties of strength of the respective material at the location of the groove.

GB—A—1 220 140 discloses a double-walled metal pipe provided with a circumferentially extending external groove, but this groove is not in the socket. Moreover, this double walled pipe does not comprise longitudinal partitions contrary to the plastics pipe of the invention. Thus the expert believed that the formation of such a groove in a socket of a plastics pipe by pressing the walls of the channels onto each other would not provide a socket of sufficient strength. Surprisingly the strength properties are excellent notwithstanding the small amounts of plastics as present in the socket wall.

The invention also comprises a method of forming the plastics pipe of the invention with a groove by subjecting the heated socket of the plastics pipe to the action of an expandable groove forming member, said method being characterized by inserting a mandrel into the socket and surrounding the outer side of the socket with an outer ring member either the mandrel or the outer ring member comprising the expandable groove forming member while the outer ring member or the mandrel serves as a mould, expanding the groove forming member and pressing the pipe walls tightly onto each other and towards the mould only in the area of the groove.

A groove is formed very appropriately by pressing the channel walls tightly onto each other and closing the channels starting from the inner wall of the pipe, thereby forming an internal groove chamber for the receipt of a sealing member.

In a very convenient embodiment the groove is formed by pressing the channel walls onto each other and closing the channels starting from the outer wall of the pipe, whereby a groove is obtained which snappingly engages a retaining ring, holding a sealing member in position.

In a particularly advantageous embodiment of a plastics pipe in accordance with the invention the groove is an inner helically extending groove in the socket, which groove engages outer screw thread formed by an external helically extending groove of a male pipe part.

Several embodiments of the present invention will now be illustrated in the accompanying drawings, wherein

Figure 1 shows a first embodiment of a plastics pipe according to the invention;

Figure 2 shows a cross-section of a plastics pipe in accordance with the invention;

Figure 3 shows a further embodiment of a plastics pipe part in accordance with the invention comprising an external groove.

Figure 4 shows an embodiment of a connection between two plastics pipe parts in accordance with the invention, one pipe part being provided with a helically extending external groove, the other pipe part being provided with a helically extending internal groove, so as to obtain a screw connection;

Figure 5 shows a further embodiment of a plastics pipe in accordance with the invention comprising an external groove and a retaining ring for the formation of an end groove chamber;

Figure 6 shows a detail of the end of a plastics pipe according to the present invention.

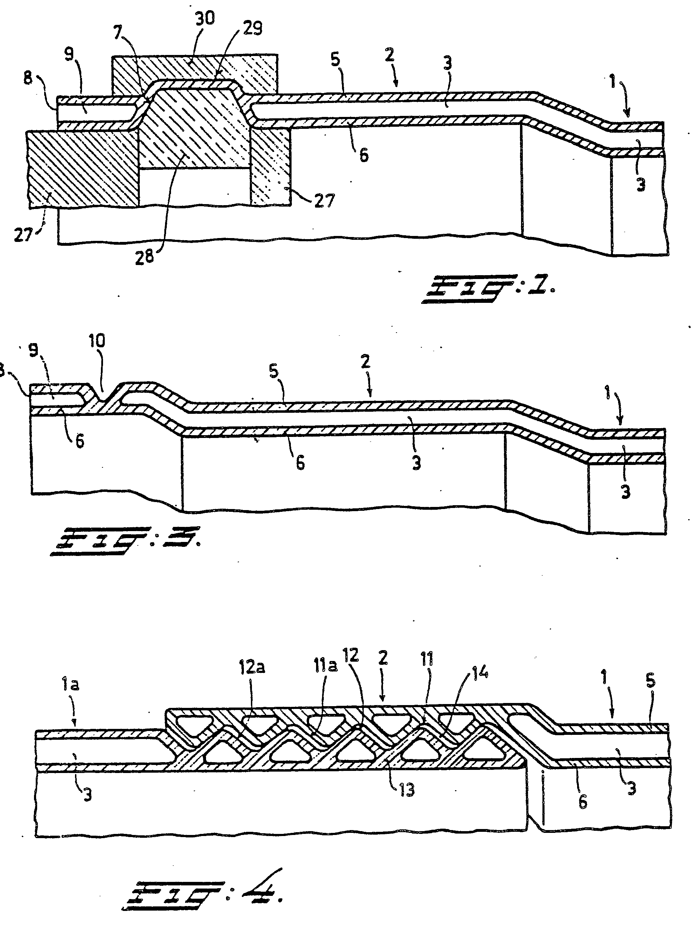

Figure 1 shows a plastics pipe part 1 comprising a socket part 2, said pipe part 1 and said socket part 2 comprising longitudinally extending channels 3, bound by longitudinally extending partitions 4. The socket 2 is provided with an outer wall 5 and an inner wall 6. By pressing the inner wall 6 outwardly towards the outer wall 5, a groove chamber 7 is obtained for the receipt of a sealing member.

It will be obvious that a pipe of this type will have an outside elevation, the height of which is less than when such a groove is formed in a pipe not comprising said longitudinally extending channels.

As the groove chamber 7 is located at a distance from the front end 8 of the plastics pipe, open channel parts will exist between said front end 8 of the plastics pipe and said groove chamber 7; said channel parts are referenced 9.

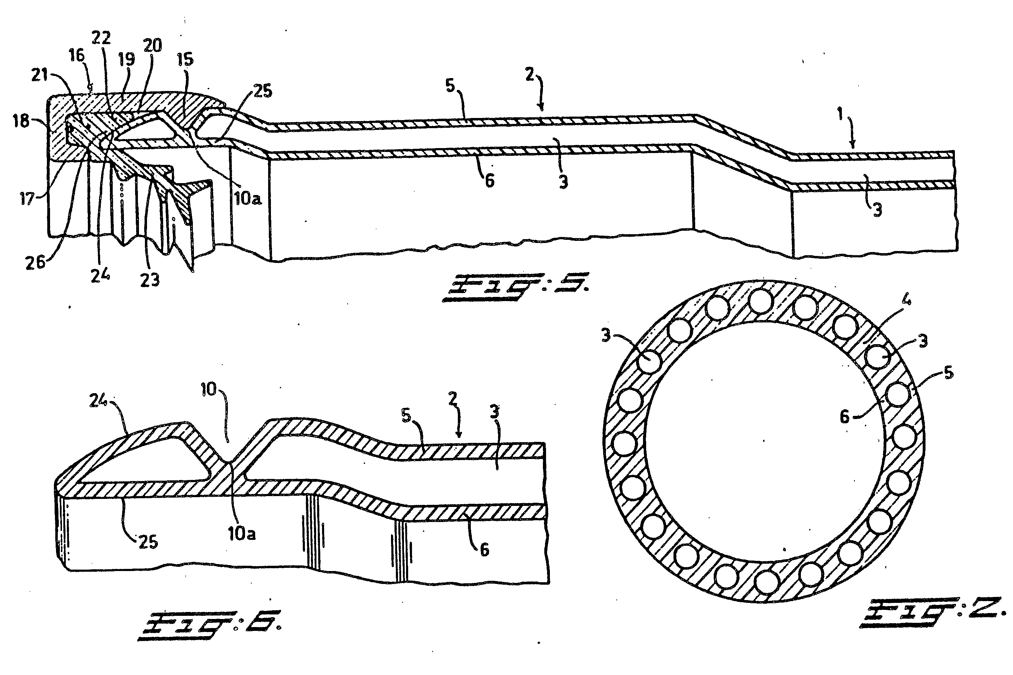

Figure 3 clearly shows the longitudinally extending channels 3 formed by the longitudinal partitions 4. Said longitudinally extending channels 3 preferably have a rounded or an elliptical cross-section, and more preferably a round cross-section.

Figure 3 shows a further embodiment likewise comprising a pipe part 1 being provided with a socket part 2 and longitudinal channels 3, extending to within said socket part 2. In view of the latter a groove 10 is formed by pressing the inner wall 6 and the outer wall 5 of the socket towards one another, thus sealing off the channels 3.

The embodiment as described hereinbefore likewise shows open channels parts 9 between the external groove 10 and the front end 8 of the plastics pipe part.

Figure 4 shows a screw-connection between two plastics pipe parts comprising longitudinally extending channels 3. One plastics pipe part 1 is provided with a socket widening 2, the inside of which comprises a helically extending groove 11, from which it results that the channels 3 are sealed off at a plurality of locations.

Figure 4 also shows a male pipe part 1a, the outer wall 5 of the male pipe part 1a is provided with a helically extending external groove 12. By selecting the same pitch of the screws 11 and 12, plastics pipe part 1 can be connected with the male plastics pipe part 1a, by screwing their ends 2 and 13 tightly into each other.

Said screwing is facilitated by providing a small clearance 14 between the wall 11a of the helically extending internal groove 11 and the wall 12a of the helically extending external groove 12.

Figure 5 shows a further embodiment wherein the groove 10 serves for receiving a projecting part 15 of a retaining ring 16, said retaining ring comprising a short leg part 17, a bottom part 18 and a long leg part 19. As seen in a longitudinal direction, said retaining ring therefore is J-shaped.

The annular projecting part 15 snaps into the groove 10, which is formed by pressing the channels 3 together, due to uniting the outer wall 5 with the inner wall 6 of the plastics pipe part.

Not only a good connection is ensured by cooperation of the annular part 15 upon the long leg 19 of the retaining ring 16, with the groove 10 on the outer side of the socket 2, but also an annular end groove chamber 20 is produced.

In said annular end groove chamber 20 a head part 21 is disposed of a sealing member 22 which comprises a sealing sleeve 23. In a completed pipe connection, said sealing sleeve 23 is received in a longitudinal chamber 25 formed by the front end of the socket 2.

The inner diameter of leg part 17 is substantially equal to the inner diameter of the socket wall 6 being provided with an end widening 25.

Mounting the retaining ring is facilitated by sealing off the front end of the longitudinally extending channels 3, by a curved end sealing part 24.

The presence of the end sealing part 24 ensures an optimum sealing, especially in case that a part 26 of head 21 of the sealing member adjoins the curved wall of the end sealing part 24, sealing off the ends of the channels, said sealing part 24 is formed as a chamfer 23. The groove 10 is provided with a rounded bottom 10a in order to prevent a notch action in plastics material (see Figure 6).

Figure 1 also shows the forming of the groove chamber 7 in the socket 2. To that end the outer side of the socket 2 is surrounded by an outer mould 30, while the inner side of the socket 2 is provided with a mandrel 27, comprising an expandable core 28. Said expandable core 28 is pressed outwardly, thereby forming the groove chamber 7, due to the fact that the inner wall 6 is pressed entirely against the outer wall 5 of the socket 2, while sealing off the channels 3. As the plastics are able to yield, a very homogeneous wall part 29 of the groove chamber bottom is obtained. Actually the plastics material is pressed away into the channels, so that no accumulation of material beside a groove will occur.

## Claims

1. A plastics pipe (1) provided with a socket (2) at one end, said socket having at least one circumferentially extending groove (7, 10, 11), said pipe comprising an inner wall (6) and an outer wall (5) and longitudinal partitions (4) in between them and being integral with said inner wall (6) and said outer wall (5) bounding longitudinally extending channels (3), which groove has been formed by pressing the walls of the channels onto each other at a position spaced from the pipe end (8), characterized in that the channels (3) extend in the socket (2) on both sides of the groove (7, 10, 11).

2. A plastics pipe according to claim 1, characterized in that the groove is an internal groove (7) for the receipt of a sealing member.

3. A plastics pipe according to claim 1, characterized in that the groove is an external groove (10).

4. A plastics pipe according to claim 3, characterized in that the external groove (10) snappingly engages a retaining ring (16) being J-shaped as seen in a longitudinal section of the pipe, said retaining ring holding a sealing member (22) in position.

5. A plastics pipe according to claim 3 or 4, characterized in that the socket (2) is provided with an end chamfer by means of an end sealing part (24) connecting the inner wall and the outer wall of the socket.

6. A plastics pipe according to claim 6, characterized in that said end sealing part (24) has a curved shape.

7. A plastics pipe according to claim 1, characterized in that the groove is an inner helically extending groove (11) and that the channels (3) are open between the turns of said helically extending groove (fig. 4).

8. A plastics pipe according to claim 7, characterized in that the helically extending groove (11) engages outer screw thread formed by an external helically extending groove (12) of a male pipe part (1a).

9. A method of forming the plastics pipe (1) according to any of the preceding claims with a groove (7, 10, 11) by subjecting the heated socket (2) of the plastics pipe to the action of an expandable groove forming member (28), characterized by inserting a mandrel (27) into the socket (2) and surrounding the outer side of the socket (2) with an outer ring member (30) either the mandrel or the outer ring member comprising the expandable groove forming member (28) while the outer ring member or the mandrel serves as a mould, expanding the groove forming member (28) and pressing the pipe walls (5, 6) tightly onto each other and towards the mould (30) only in the area of the groove.

10. A method according to claim 9, characterized in that the longitudinally extending channels (3) in the socket (2) are closed by pressing from the outer side or from the inner side.

11. A method according to claim 9 or 10, characterized in that the plastics pipe for forming the groove by pressing channels walls onto each other is heated to a temperature of more than 80°C, said temperature preferably being comprised between 120° and 170°C.

**Revendications**

1. Tuyau en matière plastique (1) pourvu à l'une des ses extrémités d'une partie femelle (2), cette partie femelle comportant an moins une rainure s'étendant circonférentiellement (7, 10, 11), ledit tuyau comprenant une paroi intérieure (6) et une paroi extérieure (5) entre lesquelles s'étendent des cloisons longitudinales (4), qui font partie intégrante de ladite paroi intérieure (6), cependant que ladite paroi extérieure (5) délimite des canaux longitudinaux (3), ladite rainure ayant été formée en pressent les parois des canaux l'une contre l'autre en un point espacé de l'extrémité (8) du tuyau, caractérisé en ce que les canaux (3) s'étendent dans la partie femelle (2), de part et d'autre de la rainure (7, 10, 11).

2. Tuyau en matière plastique selon la revendication 1, caractérisé en ce que la rainure est une rainure intérieure (7) destinée à recevoir un organe d'étanchéité.

3. Tuyau en matière plastique selon la revendication 1, caractérisé en ce que la rainure est une rainure extérieure (10).

4. Tuyau en matière plastique selon la revendication 3, caractérisé en ce que, dans la rainure extérieure (10), s'engage du fait de sa propre élasticité une bague d'arrêt (16) qui, vue dans une coupe longitudinale du tuyau, a une forme en J, ladite bague d'arrêt maintenant en place un organe d'étanchéité (22).

5. Tuyau en mantière platique selon la revendications 3 ou 4, caractérisé en ce que la partie femelle (2) est pourvue d'un chanfrein d'extrémité formé par une partie d'étanchéité terminale (24) reliant les parois intérieure et extérieure de la partie femelle.

6. Tuyau en matière plastique selon la revendication 6, caractérisé en ce que ladite partie d'étanchéité terminale (24) a une forme incurvée.

7. Tuyau en matière plastique selon la revendication 1, caractérisé en ce que la rainure est une rainue intérieure hélicoïdale (11) et en ce que les canaux (3) sont ouverts entre les spires de ladite rainure hélicoïdale (figure 4).

8. Tuyau en matière plastique selon la revendication 7, caractérisé en ce que la rainure hélicoïdale (11) vient en prise avec un filetage extérieur formé par une rainure hélicoïdale extérieure (12) d'une partie de tuyau mâle (1a).

9. Procédé pour former un tuyau en matière plastique (1) selon l'une quelconque des revendications précédentes, ayant une rainure (7, 10, 11), selon lequel on soumet la partie femelle (2) chauffée du tuyau en matière plastique à l'action d'un organe expansible de formation de rainure (28), caractérisé en ce qu'on introduit dans la partie femelle (2) un mandrin (27), en ce qu'on entoure la face extérieure de cette partie femmel (2) d'un organe annulaire extérieur (30), le mandrin ou l'organe annulaire extérieur portant l'organe expansible de formation de la rainure (28), tandis que l'organe annulaire extérieur ou le mandrin sert de moule, en ce qu'on dilate l'organe de formation de la rainure (28) et en ce qu'on presse les parois (5, 6) du tuyau étroitement l'une contre l'autre et vers le moule (30) seulement dans la région de la rainure.

10. Procédé selon la revendication 9, caractérisé en ce qu'on ferme les canaux longitudinaux (3) de la partie femelle (2) par une pression exercée du côté extérieur on du côté intérieur.

11. Procédé selon la revendication 9 ou 10, caractérisé en ce qu'on chauffe le tuyau en matière plastique pour former la rainure tout en pressant les parois des canaux l'une contre l'autre, à une température supérieure à 80°C, cette température étant de préférence comprise entre 120° et 170°C.

**Patentansprüche**

1. Kunststoffrohr (1) mit einer an einem Ende vorgesehenen Muffee mit zumindest einer sich in Umfangsrichtung erstreckenden Nut (7, 10, 11), wobei das Rohr eine Innenwand (6) und eine Außenwand (5) sowie Längstrennwände (4) zwischen diesen umfaßt, die mit der Innenwand (6) und der Außenwand (5) aus einem Stück bestehen und sich in Längsrichtung erstreckende Kanäle (3) begrenzen, und wobei die Nut durch Aufeinanderpressen der Kanalwände an einer vom Rohrende (8) beabstandeten Stelle gebildet ist, dadurch gekennzeichnet, daß sich die Kanäle (3) in der Muffe (2) zu beiden Seiten der Nut (7, 10, 11) erstrecken.

2. Kunststoffrohr nach Anspruch 1, dadurch gekennzeichnet, daß die Nut eine Innennut (7) zur Aufnahme eines Dichtungsglieds ist.

3. Kunststoffrohr nach Anspruch 1, dadurch gekennzeichnet, daß die Nut eine Außennut (10) ist.

4. Kunstoffrohr nach Anspruch 3, dadurch gekennzeichnet, daß die Außennut (10) mit einem Haltering (16) in Rasteingriff steht, der im Längsschnitt des Rohres gesehen J-förmig ausgebildet ist und eine Dichtunsglied (22) in Stellung hält.

5. Kunststoffrohr nach Anspruch 3 oder 4, dadurch gekennzeichnet, daß die Muffe (2) mittels eines die Innen- und die Außenwand miteinander verbindenden Endverschlußteils (24) mit einer Endabschrägung versehen ist.

6. Kunststoffrohr nach Anspruch 5, dadurch gekennzeichnet, daß der Endverschlußteil (24) eine gekrümte Form aufweist.

7. Kunststoffrohr nach Anspruch 1, dadurch gekennzeichnet, daß die Nut eine schraubenlinienförmig verlaufende Innennut (11) ist und die Kanäle (3) zwischen den Windungen der schraubenlinienförmigen Nut offen sind (Fig. 4).

8. Kunststoffrohr nach Anspruch 7, dadurch gekennzeichnet, daß die schraubenlinienförmige Nut (11) mit einem Außengewinde in Eingriff steht, das von einer schraubenlinienförmigen Außennut (12) eines Einsteckrohrteils (1a) gebildet ist.

9. Verfahren zum Herstellen eines Kunststoffrohrs (1) nach einem der vorhergehenden Ansprüche mit einer Nut (7, 10, 11), wobei die erwärmte Muffe (2) des Kunststoffrohrs der Einwirkung eines aufweitbaren Nutformteils (28) ausgesetzt wird, dadurch gekennzeichnet, daß ein Dorn (27) in die Muffe (2) eingeführt und die Außenseite der Muffe (2) mit einem Außenring (30) umgeben wird, wobei entweder der Dorn oder der Außenring den aufweitbaren Nutformteil (28) aufweist, während der Außenring oder der Dorn als Form dient, und daß lediglich im Bereich der Nut der Nutformteil (28) aufgeweitet wird und die Rohrwände (5, 6) fest gegeneinander und gegen die Form (30) gedrückt werden.

10. Verfahren nach Anspruch 9, dadurch gekennzeichnet, daß die sich in der Muffe (2) in Längsrichtung erstreckenden Kanäle (3) durch Drücken von der Außenseite oder von der Innenseite her geschlossen werden.

11. Verfahren nach Anspruch 9 oder 10, dadurch gekennzeichnet, daß das Kunststoffrohr zum Formen der Nut durch Gegeneinanderdrücken der Kanalwände auf eine Temperatur von mehr als 80°C, vorzugsweise von 120 bis 170°C, erwärmt wird.

O 013 458

*FIG: 1.*

*FIG: 3.*

*FIG: 4.*

1

_Fig. 5._

_Fig. 6._

_Fig. 2._

0 013 458